Europäisches Patentamt

European Patent Office

Office européen des brevets

(19)

(11) Publication number: **0 002 367**
**B1**

(12) **EUROPEAN PATENT SPECIFICATION**

(45) Date of publication of patent specification: **17.03.82**

(51) Int. Cl.³: **H 01 R 23/02, H 01 R 4/24**

(21) Application number: **78300707.3**

(22) Date of filing: **01.12.78**

(54) Terminated flat flexible cable assembly.

(30) Priority: **06.12.77 US 858128**

(43) Date of publication of application:
**13.06.79 Bulletin 79/12**

(45) Publication of the grant of the patent:
**17.03.82 Bulletin 82/11**

(84) Designated Contracting States:
**BE CH DE FR GB IT NL SE**

(56) References cited:
**DE - A - 2 520 837**
**US - A - 3 562 798**
**US - A - 4 027 941**
**US - A - 3 924 923**
**US - A - 4 054 353**
**US - A - 4 073 560**

(73) Proprietor: **AMP INCORPORATED**
**Eisenhower Boulevard**
**Harrisburg, Pennsylvania (US)**

(72) Inventor: **Asick, John Carl**
**1038 Pennsylvania Avenue**
**Harrisburg Pennsylvania (US)**
Inventor: **Huffnagle, Clifton Wesley**
**145 Forest Drive**
**Camp Hill Pennsylvania (US)**

(74) Representative: **Stuart-Prince, Richard Geoffrey
et al,**
**20 Queensmere**
**Slough, Berkshire SL1 1YZ (GB)**

Courier Press, Leamington Spa, England.

## Terminated flat flexible cable assembly

This invention relates to a terminated flat flexible electrical cable assembly including a cable comprising a plurality of spaced parallel conductors embedded in a sheet of electrically insulating material.

Such cable is known in which in use certain of the conductors constitute signal carrying conductors, adjacent signal conductors having between them one or more other conductors constituting ground conductors.

Such a cable arrangement is frequently found in communications systems, where it is necessary to terminate the cable by connecting the signal conductors to individual electrical terminals, and connecting the ground conductors together to a common ground terminal.

In U.S. Patent Specification No. 4,027,941 there is described an electrical connector for use in producing such a termination. With this known connector the signal conductors of a cable are terminated by means of individual terminals each having a conductor-engaging portion comprising a pair of arms adapted to penetrate the insulation of the cable and receive an individual signal conductor between them and in electrical contact therewith. The ground conductors of the cable are terminated by a common terminal arrangement comprising a first commoning strip having a plurality of integrally formed conductor-engaging portions each comprising a pair of arms adapted and arranged to penetrate the insulation of the cable and receive an individual ground conductor between them and in electrical contact therewith, all the ground conductors thus being commoned together, and a second commoning strip comprising a conductive metal strip having a plurality of apertures therein each aperture being adapted and arranged to receive and grip the arms of an individual one of the terminal portions of the first commoning strip with the cable received between the first and second commoning strips.

Cables to be terminated are often of small size, with the spacing between adjacent conductors sometimes being as little as 0.6mm. With such small cables, difficulties arise in termination, particularly when terminals having slotted conductor-engaging portions as described above in relation to the known connector are used, since there is insufficient space between adjacent conductors to accommodate two insulation-penetrating arms in line, and often even insufficient space between adjacent signal conductors or ground conductors, that is between alternate conductors in the complete cable, so to accommodate the arms.

This difficulty is overcome in the known connector by arranging the signal conductor-engaging terminals and the ground conductor-engaging terminal portions each in two parallel rows, with the terminals or terminal portions in the two rows staggered relative to each other such that adjacent signal conductors or ground conductors are terminated by terminals or terminal portions of different rows.

Thus, the known connector has four parallel rows of terminals and terminal portions, this rendering the connector relatively large in relation to the cable which it terminates.

According to this invention, there is provided a terminated flat flexible electrical cable assembly including a cable comprising a plurality of spaced parallel signal and ground conductors embedded in a sheet of electrically insulating material, and an electrical connector comprising a housing of electrically insulating material carrying a plurality of signal conductor terminals connected to individual signal conductors of the cable, and carrying a commoning conductive strip to which a plurality of ground conductors of the cable are connected, the commoning strip being formed with a plurality of apertures each constituting a means of connection to an individual ground conductor of the cable, characterised in that the ground conductors to be connected to the commoning strip are formed with loop portions pushed out of the plane of the cable prior to application of the cable to the connector which loop portions are received in the apertures in the commoning strip thereby to establish electrical connection between the ground conductors and the commoning strip.

The connector of this invention has the advantage that since the loop portions of the ground conductors are used directly as terminal portions which are received in the apertures in the commoning strip, without the use of intermediate terminal portions having pairs of arms penetrating the insulation of the cable and embracing individual ground conductors, the connections to the ground conductors can be arranged in a single row, this making it possible for the connector to be of relatively small size.

This invention will now be described by way of example, with reference to the drawings, in which:—

Figure 1 is an exploded perspective view of part of an assembly according to this invention;

Figure 2 is a sectional perspective view of the assembly of Figure 1 in the assembled state;

Figure 3 is a perspective view illustrating the forming of loops in the conductors of a flat flexible cable;

Figure 4 is a sectional side view illustrating loop formation as shown in Figure 3;

Figure 5 is a plan view of a cable formed with loops by the method shown in Figures 3 and 4;

Figure 6 is a side view of the cable of Figure 5;

Figure 7 is an exploded perspective sectional view of part of another assembly according to this invention; and

Figure 8 is a sectional perspective view of a detail of the assembly of Figure 7.

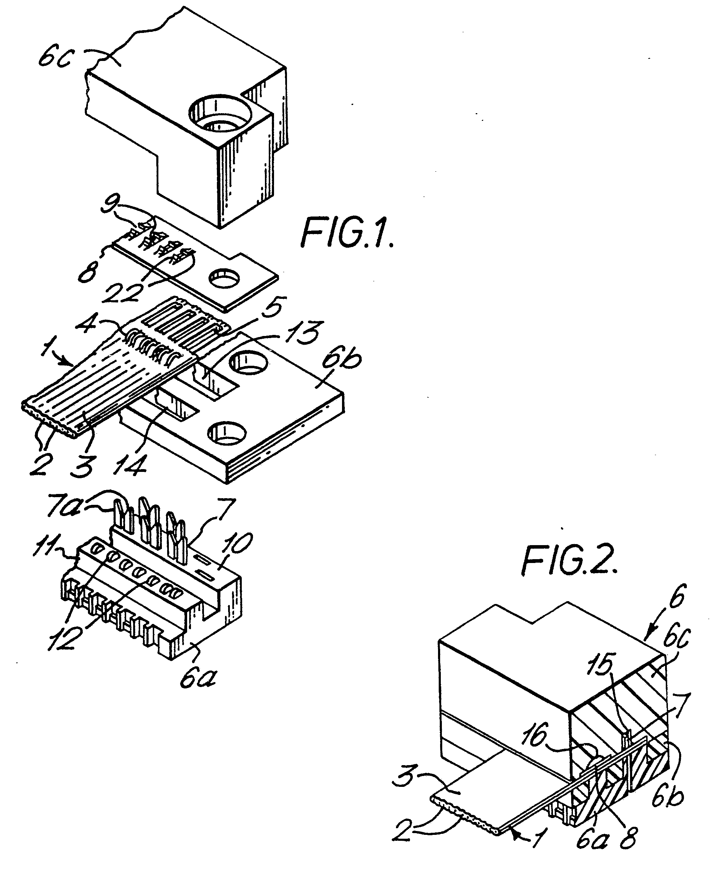

The assembly shown in Figures 1 and 2 includes a flat flexible electrical cable 1 comprising a plurality of spaced parallel conductors 2 embedded in a sheet 3 of electrically insulating material. As shown in Figure 5, individual conductors 2a which in use constitute signal conductors, are separated by conductors 2b which in use constitute ground conductors. A loop 4 is formed in each of the ground conductors 2b, by a method to be described later, the loops 4 being in a single row extending transversely of the cable 1. Portions of the ground conductors 2b and the adjacent insulation are removed to leave a row of openings 5 in the cable 1 adjacent the loops 4, adjacent openings 5 being separated by an insulated signal conductor 2a.

The assembly also includes an electrical connector comprising a housing 6 of electrically insulating material carrying a plurality of signal terminals 7 for connection to individual signal conductors 2a of the cable 1, and a commoning conductive metal strip 8 formed with a plurality of apertures 9 each constituting a means of connection to an individual ground conductor 2b of the cable 1.

The housing 6 is formed of three moulded parts, these being an elongate base part 6a which carries the signal conductor terminals 7, an intermediate part 6b which carries the commoning strip 8, and a top part 6c.

Each signal conductor terminal 7 has a conductor-engaging portion comprising a pair of arms 7a adapted to receive an individual signal conductor 2a between them and in electrical contact therewith, in known manner. The terminals 7 are arranged in two parallel rows extending transversely of the cable 1, with the terminals 7 in the two rows staggered relative to each other such that adjacent signal conductors 2a will be terminated by terminals 7 from different rows.

The conductor-engaging portions 7a of the terminals 7 extend from one longitudinal ridge 10 on the housing part 6a, while a second longitudinal ridge 11 on the housing part 6a is formed with a plurality of semi-circular projections 12 spaced apart at the same spacing as the ground conductors 2b in the cable 1.

The intermediate housing part 6b is in the form of a plate and has two through holes 13 and 14 therein, which as shown in Figure 2, receive the ridges 10 and 11 respectively when the connector is assembled. The thickness of the housing part 6b is the same as the height of the ridges 10 and 11 on the housing part 6a such that when assembled together they provide a flat support surface for the cable 1, as shown in Figure 2, with the conductor-engaging portions 7a of the terminals 7, and the projections 12 on the ridge 11, projecting above this surface.

Each aperture 9 in the commoning strip 8 is formed by pushing two resilient ears 22 out of the plane of the strip 8, and when the connector is assembled to the cable 1, the loop portions 4 of the ground conductors 2b are received in the apertures 9 between the ears 22 thereby to establish electrical connections between the ground conductors 2b and the commoning strip 8. On such assembly the loop portions 4 are supported by the projections 12 on the housing part 6b to ensure that the loop portions 4 are reliably received and retained in the apertures 9.

Further, on assembly of the connector to the cable 1, the conductor-engaging portions 7a of the terminals 7 pass through the hole 13 in the housing part 6b and engage the associated signal conductors 2a between the openings 5 in the cable 1 as described above, to establish electrical connections thereto. The signal conductors 2a can be urged onto the terminals 7 by means of the housing part 6c which as shown in Figure 2, is formed with slots 15 to receive the arms 7a of the terminals 7, and with a recess 16 to receive the conductor loops 4 and their support projections 12.

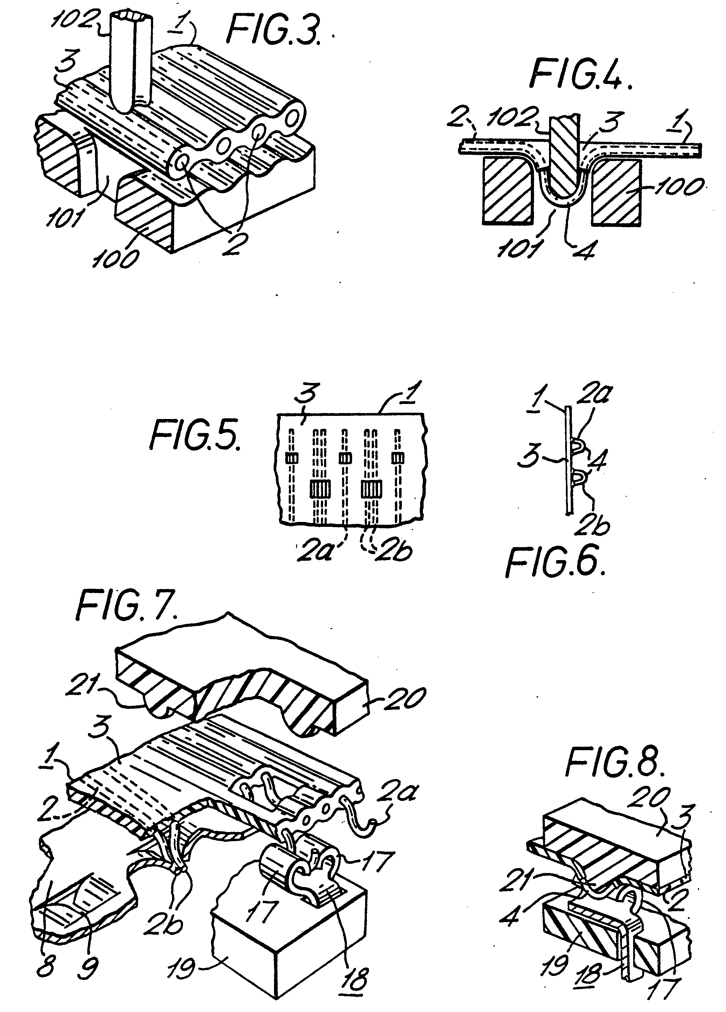

Referring now to Figures 3 and 4, the loop portions 4 are formed in the conductors 2 of the cable 1 by positioning the cable 1 on a support 100 having a surface profiled to mate with the cable 1 and being formed with apertures 101 at positions where conductor loops 4 are required in the cable 1. The cable 1 is then engaged by a punch 102 over each aperture 101, which punch 102 has a leading end formed to cut the insulation 3 of the cable 1 at each side of the conductor 2 over the aperture 101, the punch 102 then pushing the conductor 2 out of the plane of the cable 1 to form the required loop 4, as shown in Figure 4. Formation of openings 5 in the cable 1, as shown in Figure 1, prior to formation of the loops 4 facilitates formation of the loops 4 by giving the conductor 2, in which a loop 4 is to be formed, a free end near the loop formation location such that only a short length of conductor has to be pulled through the insulation 3 of the cable 1 during loop formation.

The assembly shown in Figures 7 and 8 differs from that shown in Figures 1 and 2 in that loops 4 are also formed, as described above, in the signal conductors 2a, the signal conductors 2a then being terminated by gripping the loops 4 therein between resilient arms 17 of terminals 18. The terminals 18 are carried by a housing base part 19 which also supports the commoning strip 8, and the assembly is completed by a housing cover part 20 formed with semi-circular projections 21 which serve to hold the loops 4 in the signal conductors 2a in the terminals 18, and the loops 4 in the ground conductors 2b in the apertures 9 in the commanding strip 8.

When a cable 1 as shown in Figure 5 is used, in which adjacent signal conductors 2a are separated by pairs of ground conductors 2b, then as shown in Figure 7 the ground con-

ductors 2*b* of each pair can be terminated in a single common aperture 9 in the commoning strip 8. Such an arrangement also increases the spacing between adjacent signal conductors 2*a* such that, as shown in Figure 5, the terminals for terminating the signal conductors 2*a* can be arranged in a single row, this making it possible for the assembly to be of particularly small size.

## Claims

1. A terminated flat flexible electrical cable assembly including a cable (1) comprising a plurality of spaced parallel signal and ground conductors (2*a*, 2*b*) embedded in a sheet (3) of electrically insulating material, and an electrical connector comprising a housing (6; 19, 20) of electrically insulating material carrying a plurality of signal conductor terminals (7; 18) connected to individual signal conductors (2*a*) of the cable, and carrying a commoning conductive strip (8) to which a plurality of ground conductors (2*b*) of the cable are connected, the commoning strip being formed with a plurality of apertures (9) each constituting a means of connection to an individual ground conductor of the cable, characterised in that the ground conductors (2*b*) to be connected to the commoning strip (8) are formed with loop portions (4) pushed out of the plane of the cable (1) prior to application of the cable (1) to the connector, which loop portions (4) are received in the apertures (9) in the commoning strip (8) thereby to establish electrical connections between the ground conductors (2*b*) and the commoning strip (8).

2. An assembly as claimed in Claim 1, characterised in that portions of the ground conductors (2*b*) and the insulation (3) surrounding such portions have been removed to leave a row of openings (5) adjacent the loop portions (4), adjacent openings (5) being separated by an insulated signal conductor (2*a*).

3. An assembly as claimed in Claim 2, characterised in that the signal conductors (2*a*) are terminated to individual signal terminals (7) each having a conductor-engaging portion comprising a pair of arms (7*a*) having the associated signal conductor (2*a*) received between them and in electrical contact therewith.

4. An assembly as claimed in Claim 1, Claim 2 or Claim 3, characterised in that the housing (6) is formed of three parts, these being an elongate base part (6*a*) which carries the signal conductor terminals (7), an intermediate part (6*b*), and a top part (6*c*) which serves to hold the cable (1) on a cable support surface formed by the base part (6*a*) and the intermediate part (6*b*) and to hold the commoning strip (8) on the cable (1).

5. An assembly as claimed in Claim 4, characterised in that the conductor-engaging portions (7*a*) of the signal conductor terminals (7) extend from one longitudinal ridge (10) on the base part (6*a*), there being a second longitudinal ridge (11) on the base part (6*a*) formed with a plurality of projections (12) spaced apart at the same spacing as the ground conductors (2*b*) in the cable (1), the intermediate housing part (6*b*) being in the form of a plate having two through holes (13, 14) which receive the ridges (10, 11) on the base part (6*a*) respectively, the intermediate part (6*b*) and the base part (6*a*) together defining the cable support surface from which the conductor-engaging portions (7*a*) of the signal conductor terminals (7) and the projections (12) on the base part (6*a*) project, the projections (12) engaging in the loop portions (4) of the ground conductors (2*b*) with the loop portions (4) received in the apertures (9) in the commoning strip (8).

6. An assembly as claimed in Claim 1, characterised in that the signal conductors (2*a*) of the cable (1) are formed with loop portions (4) pushed out of the plane of the cable (1), which loop portions (4) are received and gripped between resilient arms (17) of individually associated signal conductor terminals (18).

7. An assembly as claimed in Claim 6, characterised in that the signal conductor terminals (18) are carried by a housing base part (19) which also supports the commoning strip (8), the housing also comprising a cover part (20) formed with projections (21) which serve to hold the loop portions (4) of the signal conductors (2*a*) in the terminals (18), and the loop portions (4) of the ground conductors (2*b*) in the apertures (9) in the commoning strip (8).

8. An assembly as claimed in any preceding claim, characterised in that adjacent signal conductors (2*a*) in the cable (1) are separated by pairs of ground conductors (2*b*).

9. An assembly as claimed in Claim 8, characterised in that the ground conductors (2*b*) of each pair are terminated in a single common aperture (9) in the commoning strip (8).

## Patentansprüche

1. Anschlußanordnung für ein flaches, flexibles, elektrisches Kabel, mit einem Kabel (1), das eine Mehrzahl beabstandeter, paralleler Signal- und Erdleiter (2a, 2b) aufweist, die in einem Flachstück (3) aus elektrisch isolierendem Material eingebettet sind, und mit einem elektrischen Verbinder, der ein Gehäuse (6, 19, 20) aus elektrisch isolierendem Material aufweist, das eine Mehrzahl von mit einzelnen Signalleitern (2a) des Kabels verbundenen Signalleiteranschlüssen (7, 18) und einen gemeinschaftlich verbindenen leitenden Streifen (8) trägt, mit dem eine Mehrzahl von Erdleitern (2b) des Kabels verbunden sind, wobei der gemeinschaftlich verbindende Streifen mit einer Mehrzahl von Öffnungen (9) ausgebildet ist, von denen jede eine Einrichtung zur Verbindung mit einem einzelnen Erdleiter des Kabels darstellt, dadurch gekennzeichnet, daß die mit dem gemeinschaftlich verbindenden Streifen (8) zu verbindenden Erdleiter (2b) mit Schleifenbereichen (4) ausgebildet sind, die vor dem Anbringen des Kabels (1) an dem Verbinder aus der Ebene des Kabels (1) herausgedrückt worden sind und die in den Öffnungen (9) in dem gemeinschaftlich verbindenden Streifen (8) aufgenommen sind, um somit elektrische Verbindungen zwischen den Erdleitern (2b) und dem gemeinschaftlich verbindenden Streifen (8) herzustellen.

2. Anordnung nach Anspruch 1, dadurch gekennzeichnet, daß Bereiche der Erdleiter (2b) und der diese Bereiche umgebenden Isolierung (3) entfernt sind, um in der Nähe der Schleifenbereiche (4) eine Reihe von Öffnungen (5) zu bilden, wobei benachbarte Öffnungen (5) durch einen isolierten Signalleiter (2a) voneinander getrennt sind.

3. Anordnung nach Anspruch 2, dadurch gekennzeichnet, daß die Signalleiter (2a) an einzelne Signalanschlüsse (7) angeschlossen sind, von denen jeder einen Leiterangreifbereich mit einem Paar von Armen (7a) aufweist, zwischen denen der zugeordnete Signalleiter (2a) aufgenommen ist und sich in elektrischem Kontakt mit diesen befindet.

4. Anordnung nach einem der Ansprüche 1 bis 3, dadurch gekennzeichnet, daß das Gehäuse (6) aus drei Teilen gebildet ist, nämlich einem länglichen Basisteil (6a), das die Signalleiteranschlüsse (7) trägt, einem Zwischenteil (6b) und einem Oberteil (6c), das zum Festhalten des Kabels (1) auf einer von dem Basisteil (6a) und dem Zwischenteil (6b) gebildeten Kabelstützfläche sowie zum Festhalten des gemeinschaftlich verindenden Streifens (8) auf dem Kabel (1) dient.

5. Anordnung nach Anspruch 4, dadurch gekennzeichnet, daß sich die Leiterangreifbereiche (7a) der Signalleiteranschlüsse (7) von einem länglichen Steg (10) an dem Basisteil (6a) aus erstrecken, daß ein zweiter länglicher Steg (11) an dem Basisteil (6a) mit einer Mehrzahl von Vorsprüngen (12) ausgebildet ist, die im gleichen Abstand wie die Erdleiter (2b) in dem Kabel (1) voneinander beabstandet sind, daß der Zwischenteil (6b) des Gehäuses die Form einer Platte mit zwei Durchgangslöchern (13, 14) zur Aufnahme des jeweiligen Steges (10, 11) an dem Basisteil (6a) aufweist, daß der Zwischenteil (6b) und der Basisteil (6a) zusammen die Kabelstützfläche bilden, von der die Leiterangreifbereiche (7a) der Signalleiteranschlüsse (7) und die Vorsprünge (12) an dem Basisteil (6a) vorstehen, und daß die Vorsprünge (12) in die Schleifenbereiche (4) der Erdleiter (2b) eingreifen und die Schliefenbereiche (4) in den Öffnungen (9) in dem gemeinschaftlich verbindenden Streifen (8) aufgenommen sind.

6. Anordnung nach Anspruch 1, dadurch gekennzeichnet, daß die Signalleiter (2a) des Kabels (1) mit Schleifenbereichen (4) ausgebildet sind, die aus der Ebene des Kabels (1) herausgedrückt sind zwischen federnd nachgiebigen Armen (17) einzeln zugeordneter Signalleiteranschlüsse (18) aufgenommen und ergriffen sind.

7. Anordnung nach Anspruch 6, dadurch gekennzeichnet, daß die Signalleiteranschlüsse (18) von einem Gehäuse-Basisteil (19) getragen sind, der auch den gemeinschaftlich verbindenden Streifen (8) stützt, daß das Gehäuse außerdem einen Abdeckteil (20) aufweist, an dem Vorsprünge (21) ausgebildet sind, die zum Festhalten der Schleifenbereiche (4) der Signalleiter (2a) in den Anschlüssen (18) und der Schleifenbereiche (4) der Erdleiter (2b) in den Öffnungen (9) in dem gemeinschaftlich verbindenden Streifen (8) dienen.

8. Anordnung nach einem der vorausgehenden Ansprüche, dadurch gekennzeichnet, daß benachbarte Signalleiter (2a) in dem Kabel (1) durch Paare von Erdleitern (2b) voneinander getrennt sind.

9. Anordnung nach Anspruch 8, dadurch gekennzeichnet, daß die Erdleiter (2b) jedes Paares in einer einzignen gemeinsamen Öffnung (9) in dem gemeinschaftlich verbindenden Streifen (8) angeschlossen sind.

## Revendications

1. Ensemble à câble électrique flexible et plat, terminé, comprenant un câble (1) comportant plusieurs conducteurs de signaux et de masse parallèles, espacés (2a, 2b) noyés dans une feuille (3) de matière électriquement isolante, et un connecteur électrique comprenant un boîtier (6, 19, 20) en matière électriquement isolante portant plusieurs bornes (7, 18) de conducteurs de signaux connectées à des conducteurs individuels (2a) de signaux du câble, et portant une bande conductrice (8) de mise en commun à laquelle plusieurs conducteurs (2b) de masse du câble sont connectés, la bande de mise en commun présantant plusieurs trous (9) constituant chacun un moyen de connexion à un conducteur individuel de masse du câble, caractérisé en ce que les conducteurs (2b) de masse devant être connectés à la bande (8) de mise en commun comportent des parties (4) en boucle repoussées hors du plan du câble (1) avant la pose du câble (1) sur le connecteur, lesquelles parties (4) en boucle sont logées dans les trous (9) de la bande (8) de mise en commun, afin d'établir les connexions électriques entre les conducteurs (2b) de masse et la bande (8) de mise en commun.

2. Ensemble selon la revendication 1, caractérisé en ce que des parties des conducteurs (2b) de masse et l'isolant (3) entourant ces parties ont été retirés pour laisser une rangée d'ouvertures (5) à proximité des parties (4) en boucle, des ouvertures adjacentes (5) étant séparées par un conducteur isolé (2a) de signaux.

3. Ensemble selon la revendication 2, caractérisé en ce que les conducteurs (2a) de signaux sont terminés par des bornes individuelles (7) de signaux ayant chacune une partie d'engagement d'un conducteur comprenant deux bras (7a) recevant entre eux le conducteur associé (2a) de signaux avec lequel ils établissent un contact électrique.

4. Ensemble selon la revendication 1, la revendication 2 ou la revendication 3, caractérisé en ce que le boîtier (6) est formé de trois parties, celles-ci étant une partie de base allongée (6a) qui porte les bornes (7) de conducteurs de signaux, une partie intermédiare (6b), et une partie supérieure (6c) qui sert à maintenir le câble (1) sur une surface de support de câble formée par la partie de base (6a) et la partie intermédiaire (6b), et à maintenir la bande (8) de mise en commun sur le câble (1).

5. Ensemble selon la revendication 4, caractérisé en ce que les parties (7a) d'engagement des conducteurs des bornes (7) de conducteurs de signaux font saillie d'une première nervure longitudinale (10) de la partie de base (6a), une second nervure longitudinale (11) étant située sur la partie de base (6a) et présentant plusieurs saillies (12) espacées due même écartement que les conducteurs (2b) de masse du câble (1), la partie intermédiaire (6b) du boîtier ayant la forme d'une plaque traversée de deux trous (13, 14) qui reçoivent respectivement les nervures (10, 11) de la partie de base (6a), la partie intermédiaire (6b) et la partie de base (6a) formant ensemble la surface de support du câble de laquelle font saillie les parties (7a) d'engagement de conducteurs des bornes (7) de conducteurs de signaux et les saillies (12) de la partie (6a) de base, les saillies (12) engageant les parties (4) en boucle des conducteurs (2b) de masse, les parties (4) en boucle étant logées dans les trous (9) de la bande (8) de mise en commun.

6. Ensemble selon la revendication 1, caractérisé en ce que les conducteurs (2a) de signaux du câble (1) comportent des parties (4) en boucle repoussées hors du plan du câble (1), lesquelles parties (4) en boucle sont logées et serrées entre des bras élastiques (17) de bornes (18) de conducteurs de signaux associées individuellement.

7. Ensemble selon la revendication 6, caractérisé en ce que les bornes (18) de conducteurs de signaux sont portées par une partie de base (19) de boîtier qui supporte également la bande (8) de mise en commun, le boîtier comprenant également une partie (20) de couvercle formée avec des saillies (21) qui servent à maintenir les parties (4) en boucle des conducteurs (2a) de signaux dans les bornes (18), et les parties (4) en boucle des conducteurs (2b) de masse dans les trous (9) de la bande (8) de mise en commun.

8. Ensemble selon l'une quelconque des revendications précédentes, caractérisé en ce que des conducteurs adjacents (2a) de signaux de câble (1) sont séparés par des paires de conducteurs (2b) de masse.

9. Ensemble selon la revendication 8, caractérisé en ce que les conducteurs (2b) de masse de chaque paire sont terminés dans un seul trou commun (9) de la bande (8) de mise en commun.

FIG.1.

FIG.2.

0 002 367

FIG.3.

FIG.4.

FIG.5.

FIG.6.

FIG.7.

FIG.8.